(19) Europäisches Patentamt / European Patent Office / Office européen des brevets

(11) **EP 3 627 273 A1**

(12) **DEMANDE DE BREVET EUROPEEN**

(43) Date de publication:
**25.03.2020 Bulletin 2020/13**

(51) Int Cl.:
*G05D 1/10* (2006.01)     *G08G 5/00* (2006.01)

(21) Numéro de dépôt: **19197075.5**

(22) Date de dépôt: **12.09.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **18.09.2018 FR 1858380**

(71) Demandeur: **AIRBUS OPERATIONS (S.A.S.)
31060 Toulouse (FR)**

(72) Inventeurs:
• **PASTRE, Thomas**
  **31060 Toulouse Cedex 9 (FR)**
• **ARNOUX, Jérôme**
  **31060 Toulouse Cedex 9 (FR)**

(74) Mandataire: **Sarraméa, Claude
Airbus Operations (S.A.S)
XIF - M0101/1
316, route de Bayonne
31060 Toulouse Cedex (FR)**

(54) **SYSTÈME ET PROCÉDÉ D'AIDE AU PILOTAGE D'UN AÉRONEF**

(57) Le système (10) d'aide au pilotage d'un aéronef (1) comprend un calculateur de gestion de vol (12) et un calculateur de guidage (18). Le calculateur de gestion de vol transmet des consignes de vitesse au calculateur de guidage de façon à piloter l'aéronef selon un profil de vitesse initial ou, selon un profil de vitesse RTA suite à la réception d'une contrainte RTA.

En réponse à la réception d'une vitesse de consigne sélectée par un membre d'équipage en présence de la contrainte RTA, le calculateur de guidage pilote l'aéronef selon la vitesse sélectée et le calculateur de gestion de vol détermine un point de désélection permettant le retour à un profil de vitesse prédéterminé tout en respectant la contrainte RTA. Le calculateur de guidage commande l'affichage, sur un écran de navigation (20), d'un symbole ($P_s$, $P_{S1}$, $P_{S2}$) correspondant à la position du point de désélection.

Fig. 2

EP 3 627 273 A1

**Description**

La présente invention concerne un système et un procédé de pilotage d'un aéronef, qui sont destinés à permettre le respect d'une contrainte d'heure de passage en un point de passage, lors d'un vol de l'aéronef.

Le pilotage des aéronefs, en particulier des avions de transport civils ou militaires, est généralement réalisé le long d'un plan de vol comportant un ensemble de points de passage (« waypoints » en anglais) définis dans l'espace tridimensionnel. L'aéronef doit être guidé le long du plan de vol en respectant une marge maximale d'erreur de position par rapport à des segments reliant les différents points de passage. De plus en plus souvent, notamment dans les zones à forte densité de trafic, certains des points de passage du plan de vol comportent une contrainte d'heure de passage généralement appelée RTA (« Required Time of Arrival » en anglais) imposée par le contrôle aérien afin de garantir une séparation satisfaisante des différents aéronefs. Dans un tel cas, l'aéronef doit être guidé le long du plan de vol en respectant en outre une marge maximale d'erreur temporelle par rapport aux contraintes RTA des points de passage comportant une telle contrainte.

De façon usuelle, avant le vol, un membre d'équipage entre un plan de vol correspondant à ce vol, dans un calculateur de gestion de vol de l'aéronef, généralement au moyen d'une interface homme-machine associée au calculateur de gestion de vol. Le calculateur de gestion de vol est par exemple un calculateur de type FMS (« Flight Management System » en anglais). De façon usuelle, ce plan de vol peut comprendre un ensemble de segments de vol correspondant par exemple à des phases de montée, de croisière et de descente de l'aéronef. A chaque segment de vol sont associées une vitesse minimale opérationnelle et une vitesse maximale opérationnelle de vol de l'aéronef. Dans un exemple particulier, la vitesse minimale opérationnelle est de 180kts (nœuds), soit environ 333km/h, en phase de montée, de 195kts (environ 361km/h) en phase de croisière et de 195kts (environ 361km/h) en phase de descente et la vitesse maximale opérationnelle est de 300kts (environ 555km/h) en phase de montée, de 290kts (environ 537km/h) en phase de croisière et de 290kts (environ 546km/h) en phase de descente.

La vitesse de l'aéronef est généralement planifiée sous la forme d'un indice de coût (« cost index » en anglais). Cet indice de coût correspond usuellement à un coefficient compris entre 0 et 1, tel que lorsque ce coefficient est égal à 1, la vitesse planifiée correspond à une vitesse maximale opérationnelle Vmax de l'aéronef et lorsque ce coefficient est égal à 0, la vitesse planifiée correspond à une vitesse minimale opérationnelle Vmin de l'aéronef. Lorsque l'indice de coût est égal à une valeur k comprise entre 0 et 1, la vitesse planifiée est égale à :

$$Vmin + k \, (Vmax - Vmin).$$

Avant le vol, l'indice de coût est entré par un membre d'équipage de l'aéronef dans le calculateur de gestion du vol de l'aéronef. Le calculateur de gestion de vol détermine alors un profil de vitesse initial pour l'ensemble des segments du plan de vol, en appliquant cet indice de coût sur l'ensemble des segments de vol. De façon particulière, l'indice de coût peut être choisi de façon à optimiser un critère d'exploitation de l'aéronef, par exemple la consommation de carburant par l'aéronef.

Pendant le vol, le calculateur de gestion du vol commande un calculateur de guidage de l'aéronef en fonction du profil de vitesse initial : pour cela, il envoie une consigne de vitesse correspondant au profil de vitesse initial de façon à piloter l'aéronef selon le profil de vitesse initial dans un mode dit managé. Le mode managé est un mode de fonctionnement du calculateur de guidage dans lequel le calculateur de guidage commande la vitesse de l'aéronef en fonction de consignes de vitesse reçues de façon automatique du calculateur de gestion de vol.

Si le pilote reçoit du contrôle aérien une contrainte de type RTA en un point de passage du plan de vol, il entre cette contrainte dans le calculateur de gestion du vol. Le calculateur de gestion du vol calcule alors une heure estimée de passage de l'aéronef à ce point de passage en tenant compte du profil de vitesse initial fonction de la valeur de l'indice de coût entrée par le membre d'équipage. Cette heure estimée de passage est généralement appelée ETA (« Estimated Time of Arrival » en anglais). Le document US5.121.325 décrit un système permettant de déterminer une heure estimée de passage d'un aéronef en un point particulier. Le calculateur de gestion du vol compare cette heure estimée de passage ETA avec la contrainte RTA. Si l'écart entre les heures ETA et RTA est supérieur à un seuil prédéterminé de durée (par exemple compris entre 10 et 30 secondes), le calculateur de gestion du vol calcule un nouveau profil de vitesse, dit RTA, fonction par exemple d'une nouvelle valeur de l'indice de coût permettant de réduire l'écart à une valeur inférieure à ce seuil prédéterminé de durée. Le calculateur de gestion de vol commande alors le calculateur de guidage en fonction du profil de vitesse RTA, en mode managé.

Un membre d'équipage, en particulier un pilote de l'aéronef, peut parfois être amené à modifier la vitesse de l'aéronef alors que celui-ci vole selon un profil de vitesse RTA pour respecter une contrainte RTA en un point de passage. Une telle modification peut notamment correspondre à un besoin d'augmenter (respectivement de diminuer) ponctuellement la vitesse de l'aéronef, par exemple si le pilote souhaite rattraper rapidement un retard (respectivement une avance) pour respecter la contrainte RTA. Pour cela, le pilote entre une vitesse, dite vitesse sélectée au moyen d'une interface homme-machine de type FCU (« Flight Control Unit » en anglais) du calculateur de guidage. Celui-ci engage alors un mode dit sélecté dans lequel il pilote l'aéronef selon ladite vitesse sélectée. Le mode sélecté est un mode de fonctionnement du calculateur de guidage dans lequel le calculateur de guidage commande la vitesse de l'aéronef en fonction de consignes de vitesse sélectionnées par un membre d'équipage, par exemple au moyen du FCU. Toutefois, si elle était maintenue, la vitesse sélectée ne permettrait pas de respecter la contrainte RTA au point de passage. Par conséquent, le pilote doit désactiver le mode sélecté, ce qui permet au calculateur de guidage de revenir en mode managé. Afin de faciliter le pilotage de l'aéronef, il existe un besoin pour automatiser le retour en mode managé.

EXPOSE DE L'INVENTION :

La présente invention a pour objet de répondre à ce besoin. Elle concerne un système d'aide au pilotage d'un aéronef, ledit système comprenant un calculateur de gestion de vol de l'aéronef et un calculateur de guidage de l'aéronef, dans lequel le calculateur de gestion de vol est configuré pour :

- déterminer un profil de vitesse initial le long d'un plan de vol courant de l'aéronef et transmettre au calculateur de guidage une consigne de vitesse correspondant au profil de vitesse initial de façon à piloter l'aéronef selon ledit profil de vitesse initial dans un mode dit managé ;
- en réponse à la réception d'une contrainte RTA en un point du plan de vol, déterminer un profil de vitesse dit RTA permettant de respecter ladite contrainte RTA et transmettre au calculateur de guidage une consigne de vitesse dite RTA correspondant au profil de vitesse RTA, de façon à piloter l'aéronef selon ledit profil de vitesse RTA dans le mode managé,

dans lequel le calculateur de guidage est configuré pour :

- accepter la réception d'une vitesse de consigne, dite vitesse sélectée, saisie par un membre d'équipage au moyen d'une interface homme-machine dudit calculateur de guidage lorsque le calculateur de guidage pilote l'aéronef selon la consigne de vitesse RTA en mode managé ; et
- activer un mode dit sélecté dans lequel ledit calculateur de guidage pilote l'aéronef selon la vitesse sélectée.

Ce système est remarquable en ce que le calculateur de gestion de vol est en outre configuré pour, en réponse à l'activation du mode sélecté dans lequel le calculateur de guidage pilote l'aéronef selon la vitesse sélectée :

- déterminer, lorsque cela est possible, un point dit de désélection défini de façon à permettre le respect de la contrainte RTA lorsque l'aéronef vole selon la vitesse sélectée entre une position courante de l'aéronef et le point de désélection, puis selon un profil de vitesse prédéterminé entre le point de désélection et le point du plan de vol auquel est associée la contrainte RTA ; et

- commander l'affichage, sur un écran de navigation du cockpit de l'aéronef, d'un symbole correspondant à la position courante de l'aéronef, d'un symbole correspondant à la position du point du plan de vol auquel est associée la contrainte RTA, ainsi que d'un symbole correspondant à la position du point de désélection.

Ainsi, le système d'aide au pilotage de l'aéronef permet d'aider un pilote de l'aéronef à ramener l'aéronef en mode managé après l'entrée d'une vitesse sélectée au moyen de l'interface homme-machine du calculateur de guidage. L'affichage de la position du point de désélection ainsi déterminé permet au pilote de savoir à quel moment il doit revenir au mode managé s'il souhaite rejoindre le profil de vitesse prédéterminé. Comme indiqué, le point de désélection est déterminé par le calculateur de gestion de vol de telle façon que l'aéronef respecte la contrainte RTA au point de passage en volant à la vitesse sélectée jusqu'au point de désélection, puis selon le profil de vitesse prédéterminé depuis le point de désélection jusqu'au point de passage auquel est associée la contrainte RTA. Par conséquent, ce point de désélection présente l'avantage de permettre le respect de la contrainte RTA : le pilote qui choisit de revenir au mode managé, selon le profil de vitesse prédéterminé, lorsque l'aéronef passe au point de désélection, est ainsi certain de respecter la contrainte de vitesse RTA.

Dans un mode de réalisation, le calculateur de gestion de vol est configuré pour déterminer le point de désélection de telle façon que le profil de vitesse prédéterminé corresponde à l'un des profils de vitesse suivants :

- le profil de vitesse initial ;
- un profil de vitesse dit minimal, correspondant à des valeurs de vitesse minimale opérationnelle de l'aéronef le long du plan de vol ; ou
- un profil de vitesse dit maximal, correspondant à des valeurs de vitesse maximale opérationnelle de l'aéronef le long du plan de vol.

De façon avantageuse, le calculateur de gestion de vol est configuré pour :

- déterminer un premier point de désélection correspondant au profil de vitesse initial et un deuxième point de désélection correspondant à l'un du profil de vitesse minimal et du profil de vitesse maximal ; et
- commander l'affichage, sur l'écran de navigation du cockpit de l'aéronef, d'un symbole correspondant à la position du premier point de désélection et d'un symbole correspondant à la position du deuxième point de désélection.

Dans un mode de réalisation, le calculateur de gestion de vol est configuré pour déterminer le point de désélection par une méthode de dichotomie.

Dans un mode particulier de réalisation, le calculateur de gestion de vol est configuré pour déterminer un point, dit point milieu, correspondant au milieu de l'intervalle considéré le long du plan de vol entre la position courante de l'aéronef et le point correspondant à la contrainte RTA, puis à déterminer le point de désélection par itérations dans l'intervalle considéré le long du plan de vol entre la position courante de l'aéronef et le point milieu.

Dans un autre mode particulier de réalisation, le profil de vitesse initial correspond à un profil de vitesse optimal déterminé de façon à optimiser un critère d'exploitation de l'aéronef, en particulier la consommation de carburant de l'aéronef le long du plan de vol.

L'invention est également relative à un procédé d'aide au pilotage d'un aéronef, l'aéronef comprenant un calculateur de gestion de vol et un calculateur de guidage, le procédé comprenant les étapes suivantes mises en œuvre par le calculateur de gestion de vol :

- déterminer un profil de vitesse initial le long d'un plan de vol courant de l'aéronef et transmettre au calculateur de guidage une consigne de vitesse correspondant au profil de vitesse initial de façon à piloter l'aéronef selon ledit profil de vitesse initial dans un mode dit managé ;
- en réponse à la réception d'une contrainte RTA en un point du plan de vol, déterminer un profil de vitesse dit RTA permettant de respecter ladite contrainte RTA et transmettre au calculateur de guidage une consigne de vitesse dite RTA correspondant au profil de vitesse RTA, de façon à piloter l'aéronef selon ledit profil de vitesse RTA dans le mode managé,

ainsi que les étapes suivantes mises en œuvre par le calculateur de guidage :

- accepter la réception d'une vitesse de consigne, dite vitesse sélectée, saisie par un membre d'équipage au moyen d'une interface homme-machine dudit calculateur de guidage lorsque le calculateur de guidage pilote l'aéronef selon la consigne de vitesse RTA en mode managé ; et
- activer un mode dit sélecté dans lequel ledit calculateur de guidage pilote l'aéronef selon la vitesse sélectée.

Le procédé est remarquable en ce qu'il comprend en outre les étapes suivantes mises en œuvre par le calculateur de gestion de vol, en réponse à l'activation du mode sélecté dans lequel le calculateur de guidage pilote l'aéronef selon la vitesse sélectée :

- déterminer, lorsque cela est possible, un point dit de désélection défini de façon à permettre le respect de la contrainte RTA lorsque l'aéronef vole selon la vitesse sélectée entre une position courante de l'aéronef et le point de désélection, puis selon un profil de vitesse prédéterminé entre le point de désélection et le point du plan de vol auquel est associée la contrainte RTA ; et
- commander l'affichage, sur un écran de navigation du cockpit de l'aéronef, d'un symbole correspondant à la position courante de l'aéronef, d'un symbole correspondant à la position du point du plan de vol auquel est associée la contrainte RTA, ainsi que d'un symbole correspondant à la position du point de désélection.

Dans un mode de réalisation, le point de désélection est déterminé de telle façon que le profil de vitesse prédéterminé corresponde à l'un des profils de vitesse suivants :

- le profil de vitesse initial ;
- un profil de vitesse dit minimal, correspondant à des valeurs de vitesse minimale opérationnelle de l'aéronef le long du plan de vol ; ou
- un profil de vitesse dit maximal, correspondant à des valeurs de vitesse maximale opérationnelle de l'aéronef le long du plan de vol.

De façon avantageuse, le procédé comprend les étapes suivantes mises en œuvre par le calculateur de gestion de vol :

- déterminer un premier point de désélection correspondant au profil de vitesse initial et un deuxième point de désélection correspondant à l'un du profil de vitesse minimal et du profil de vitesse maximal ; et
- commander l'affichage, sur l'écran de navigation du cockpit de l'aéronef, d'un symbole correspondant à la position du premier point de désélection et d'un symbole correspondant à la position du deuxième point de désélection.

Dans un mode de réalisation, le point de désélection est déterminé par une méthode de dichotomie.

Dans un mode particulier de réalisation, le procédé comprend en outre la détermination d'un point, dit point milieu, correspondant au milieu de l'intervalle considéré le long du plan de vol entre la position courante de l'aéronef et le point correspondant à la contrainte RTA, puis la détermination du point de désélection par itérations dans l'intervalle considéré le long du plan de vol entre la position courante de l'aéronef et le point milieu.

Dans un autre mode particulier de réalisation, le profil de vitesse initial correspond à un profil de vitesse optimal déterminé de façon à optimiser un critère d'exploitation de l'aéronef, en particulier la consommation de carburant de l'aéronef le long du plan de vol.

L'invention concerne aussi un aéronef comportant un système d'aide au pilotage tel que précité.

DESCRIPTION DETAILLEE :

L'invention sera mieux comprise à la lecture de la description qui suit et à l'examen des figures annexées.

La figure 1 représente un aéronef comprenant un système d'aide au pilotage conforme à l'invention ;

La figure 2 est un schéma synoptique d'un système de pilotage d'un aéronef, conforme à l'invention ;

Les figures 3, 4 et 5 représentent des affichages sur un écran du cockpit de l'aéronef, conformément à des modes de réalisation de l'invention.

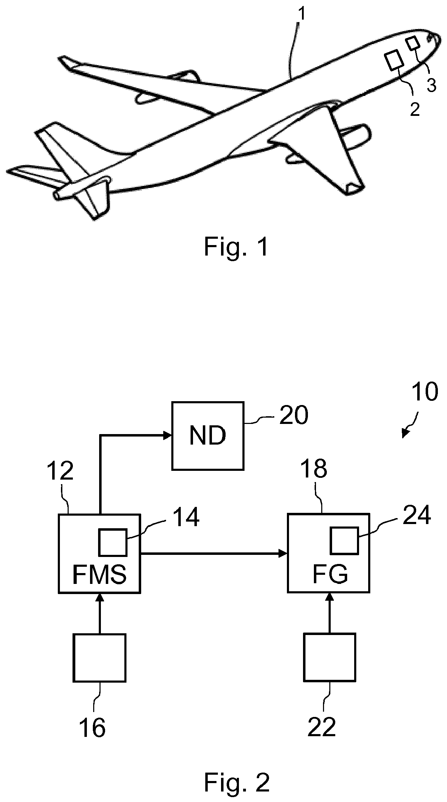

Le système 10 représenté schématiquement sur la figure 2 est conforme à un mode de réalisation de l'invention. Il est embarqué à bord d'un aéronef 1 tel que représenté sur la figure 1, en particulier un avion de transport civil ou un avion de transport militaire, en vue d'aider cet aéronef à voler selon un plan de vol, en respectant une contrainte d'heure de passage RTA en un point de passage du plan de vol. Ce système est par exemple installé dans une baie avionique 2 de l'aéronef. Le système 10 comporte un calculateur 12 de gestion du vol de l'aéronef, en particulier un calculateur de type FMS (« Flight Management System » en anglais). Ce calculateur de gestion du vol comprend une unité de traitement 14. Il comprend également une mémoire non représentée, prévue pour enregistrer au moins un plan de vol de l'aéronef. Le calculateur de gestion de vol 12 est relié en entrée à une première interface homme-machine 16, située de préférence dans le cockpit 3 de l'aéronef. Cette interface homme-machine correspond en particulier à un ensemble comprenant un écran, un clavier et/ou une unité de pointage, par exemple une unité de type MCDU (« Multipurpose Control and Display Unit » en anglais). Une sortie du calculateur 12 de gestion de vol est reliée à une entrée d'un écran de navigation 20 du cockpit 3 de l'aéronef, libellé ND (« Navigation Display » en anglais) sur la figure. Une autre sortie du calculateur 12 de gestion de vol est reliée à une entrée d'un calculateur 18 de guidage de l'aéronef, en particulier un calculateur de type FG (« Flight Guidance computer » en anglais). Le calculateur de guidage 18 est relié en entrée à une deuxième interface homme-machine 22, située de préférence dans le cockpit 3 de l'aéronef. Cette interface homme-machine correspond en particulier à un dispositif de type FCU (« Flight Control Unit » en anglais). Le calculateur de guidage18 comporte une unité de pilotage automatique 24 prévue pour guider l'aéronef selon un mode de guidage automatique (lorsqu'un pilote automatique de l'aéronef est engagé) ou selon un mode de guidage manuel, par exemple au moyen d'un directeur de vol. L'unité de pilotage automatique 24 correspond par exemple à une fonction logicielle du calculateur de guidage 18. En ce qui concerne le contrôle de la vitesse, le calculateur de guidage comporte un premier mode dit managé, dans lequel l'unité de pilotage automatique 24 contrôle la vitesse de l'aéronef en fonction de consignes de vitesse reçues du calculateur 12 de gestion de vol, ainsi qu'un deuxième mode dit sélecté, dans lequel l'unité de pilotage automatique 24 contrôle la vitesse de l'aéronef en fonction de consignes de vitesse sélectionnées par un membre d'équipage au moyen de l'interface homme machine 22. Pour contrôler de façon automatique la vitesse de l'aéronef, l'unité de pilotage automatique 24 est par exemple configurée pour transmettre des consignes à un système d'auto-poussée ou d'auto-manette de l'aéronef.

En fonctionnement, avant un vol de l'aéronef, un membre d'équipage, en particulier un pilote de l'aéronef, définit un plan de vol initial pour ce vol de l'aéronef et il entre ce plan de vol dans le calculateur 12 de gestion de vol au moyen de l'interface homme-machine 16. Ce plan de vol initial comprend un profil initial de vitesse de l'aéronef. Le calculateur de gestion de vol enregistre le plan de vol initial et le profil de vitesse initial dans sa mémoire. De façon avantageuse, comme indiqué précédemment, le profil de vitesse initial est par exemple défini en fonction d'un indice de coût de façon à optimiser un critère d'exploitation de l'aéronef, par exemple la consommation de carburant. Le profil de vitesse initial correspond alors à un profil de vitesse optimal.

Pendant le vol de l'aéronef, le calculateur de gestion de vol commande le calculateur de guidage 18 de l'aéronef pour guider l'aéronef selon le plan de vol initial et le profil de vitesse initial. En particulier, le calculateur de gestion de vol 12 transmet au calculateur de guidage 18 une consigne de vitesse correspondant au profil de vitesse initial, de telle sorte que le calculateur de guidage pilote l'aéronef selon le profil de vitesse initial en mode managé.

Le contrôle aérien peut être amené à envoyer, au pilote de l'aéronef, une contrainte d'heure de passage RTA associée à un point de passage du plan de vol. Si le pilote approuve cette contrainte RTA, il l'entre dans le calculateur de gestion de vol au moyen de la première interface homme-machine 16. Le calculateur de gestion de vol 12 détermine alors un profil de vitesse, dit RTA, de l'aéronef permettant de respecter la contrainte RTA, puis il transmet au calculateur de guidage 18 une consigne dite RTA, de telle sorte que le calculateur de guidage pilote l'aéronef selon le profil de vitesse RTA en mode managé.

Parfois, alors que la vitesse de l'aéronef est pilotée selon le profil de vitesse RTA en mode managé, le pilote de l'aéronef peut souhaiter modifier ponctuellement la vitesse de l'aéronef, par exemple pour rattraper plus rapidement un retard ou une avance par rapport à la contrainte RTA. Dans une telle situation, le pilote saisit et valide une valeur de vitesse souhaitée, dite vitesse sélectée, au moyen de la deuxième interface homme-machine 22 de type FCU. Le calculateur de guidage 18 qui reçoit cette vitesse sélectée modifie alors son mode de guidage, de façon à passer du mode de guidage managé (dans lequel il pilotait l'aéronef selon le profil de vitesse RTA en mode managé) à un mode de guidage sélecté dans lequel il pilote l'aéronef selon la vitesse sélectée.

Suite au passage en mode sélecté pour le contrôle de la vitesse de l'aéronef par le calculateur de guidage 18, le calculateur de gestion de vol 12 détermine un point du plan de vol de l'aéronef, dit point de désélection, défini de façon à permettre le respect de la contrainte RTA lorsque l'aéronef vole selon la vitesse sélectée entre une position courante de l'aéronef et le point de désélection, puis vole selon un profil de vitesse prédéterminé entre le point de désélection et le point du plan de vol auquel est associée la contrainte RTA. Le point de désélection est par exemple déterminé par itérations successives entre la position courante de l'aéronef et le point du plan de vol auquel est associée la contrainte RTA, jusqu'à trouver une valeur du point de désélection permettant d'obtenir une heure estimée d'arrivée ETA au point du plan de vol auquel est associée la contrainte RTA, suffisamment proche de la contrainte RTA. En particulier, cette heure estimée d'arrivée est considérée suffisamment proche de la contrainte RTA lorsque l'écart entre cette heure estimée d'arrivée et la contrainte RTA est inférieur en valeur absolue à une durée prédéterminée par exemple choisie dans un intervalle de 10 à 30 secondes. Dans un mode particulier de réalisation, les différentes itérations correspondant à la détermination du point de désélection sont mises en œuvre en utilisant une méthode de dichotomie.

De façon avantageuse, le calculateur de gestion de vol 12 détermine en outre un point milieu correspondant au milieu de l'intervalle considéré le long du plan de vol entre la position courante de l'aéronef et le point correspondant à la contrainte RTA. Il détermine ensuite le point de désélection par itérations dans l'intervalle considéré le long du plan de vol, entre la position courante de l'aéronef et le point milieu. Cela permet une détermination plus rapide du point de désélection, puisque les itérations sont réalisées seulement sur la première moitié dudit intervalle.

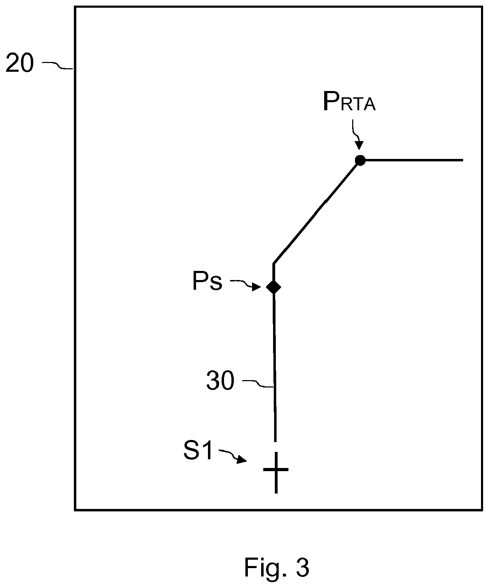

Après avoir déterminé le point de désélection, le calculateur 12 de gestion de vol commande l'affichage sur l'écran de navigation 20 du cockpit de l'aéronef, d'un symbole S1 correspondant à la position courante de l'aéronef, d'un symbole $P_{RTA}$ correspondant à la position du point du plan de vol auquel est associée la contrainte RTA, ainsi que d'un symbole Ps correspondant à la position du point de désélection, comme illustré sur la figure 3. De façon usuelle, une représentation 30 du plan de vol courant de l'aéronef est également affichée sur l'écran de navigation.

L'invention permet ainsi d'aider le pilote à respecter la contrainte RTA. En effet, le pilote peut facilement voir la position du point de désélection, illustrée par le symbole $P_S$, relativement à la position courante de l'aéronef, illustrée par le symbole S1, et à la position du point du plan de vol auquel est associée la contrainte RTA, illustrée par le symbole $P_{RTA}$. Etant donné que le point de désélection est déterminé de façon à permettre le respect de la contrainte RTA lorsque l'aéronef vole selon la vitesse sélectée entre la position courante de l'aéronef et le point de désélection, puis selon le profil de vitesse prédéterminé entre le point de désélection et le point du plan de vol auquel est associée la contrainte RTA, le pilote sait qu'il peut maintenir la vitesse sélectée jusqu'à ce que l'aéronef arrive au point de désélection, c'est-à-dire jusqu'à ce que les symboles S1 et $P_S$ soient superposés sur l'écran de navigation. Lorsque l'aéronef arrive au point de désélection, le pilote peut commander le passage du mode sélecté au mode managé, dans lequel le calculateur de guidage pilote l'aéronef selon le profil de vitesse prédéterminé : le pilote est ainsi certain de pouvoir respecter la contrainte RTA. Pour cela, le calculateur de guidage 18 est configuré pour accepter une consigne correspondante, saisie et validée par le pilote au moyen de la deuxième interface homme-machine 22 de type FCU.

Dans un mode de réalisation de l'invention, le profil de vitesse prédéterminé correspond à l'un des profils de vitesse suivants :

- le profil de vitesse initial ;
- un profil de vitesse dit minimal, correspondant à des valeurs de vitesse minimale opérationnelle de l'aéronef le long du plan de vol ; ou
- un profil de vitesse dit maximal, correspondant à des valeurs de vitesse maximale opérationnelle de l'aéronef le long du plan de vol.

De façon avantageuse, le calculateur 12 de gestion de vol détermine un premier point de désélection correspondant au profil de vitesse initial et un deuxième point de désélection correspondant à l'un du profil de vitesse minimal et du profil de vitesse maximal. Le calculateur de gestion de vol 12 commande alors l'affichage, sur l'écran de navigation du cockpit de l'aéronef, d'un symbole correspondant à la position du premier point de désélection et d'un symbole correspondant à la position du deuxième point de désélection.

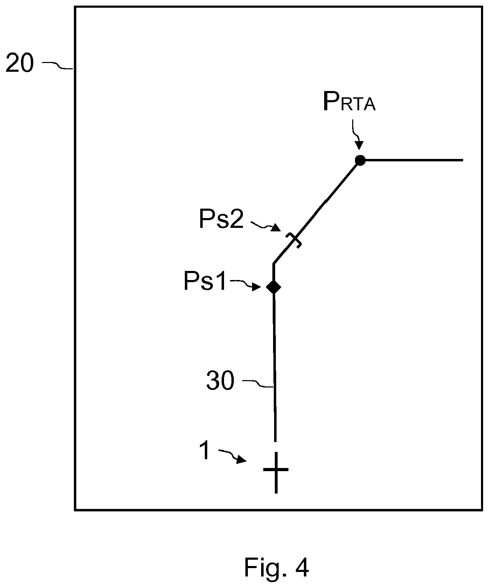

La figure 4 illustre un premier exemple d'affichage sur l'écran de navigation 20 dans lequel le calculateur de gestion de vol 12 commande l'affichage sur l'écran de navigation d'un symbole $P_{S1}$ correspondant à la position du premier point de désélection (pour lequel le profil de vitesse prédéterminé correspond au le profil de vitesse initial) et d'un symbole $P_{S2}$ correspondant à la position du deuxième point de désélection lorsque le profil de vitesse prédéterminé correspond au profil de vitesse maximal.

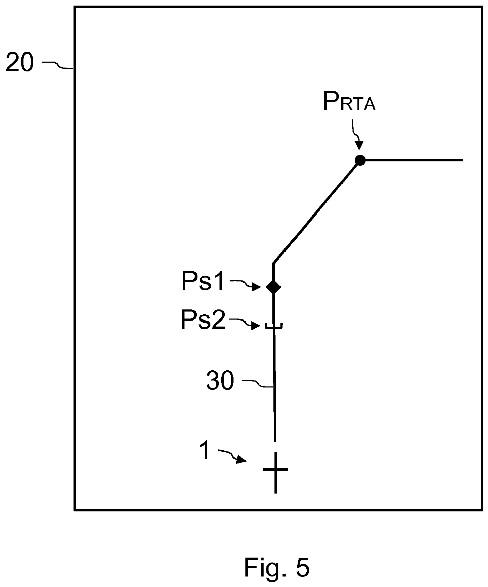

La figure 5 illustre un deuxième exemple d'affichage sur l'écran de navigation 20 dans lequel le calculateur de gestion de vol 12 commande l'affichage sur l'écran de navigation d'un symbole $P_{S1}$ correspondant à la position du premier point de désélection (pour lequel le profil de vitesse prédéterminé correspond au le profil de vitesse initial) et d'un symbole $P_{S2}$ correspondant à la position du deuxième point de désélection lorsque le profil de vitesse prédéterminé correspond au profil de vitesse minimal.

Lorsque le profil de vitesse initial est un profil de vitesse optimal tel qu'indiqué précédemment (par exemple défini par un indice de coût), l'invention permet au pilote de commander le retour au mode managé, dans lequel le calculateur de guidage 18 pilote l'aéronef selon le profil de vitesse optimal, à partir du point de désélection illustré par le symbole $P_{S1}$ sur les figures 4 et 5. Il n'est ainsi pas nécessaire d'attendre le passage de l'aéronef au point du plan de vol correspondant à la contrainte RTA pour revenir à ce profil de vitesse optimal. Cette anticipation du retour au profil de vitesse optimal permet de mieux optimiser l'exploitation de l'aéronef, par exemple sa consommation de carburant.

Dans un mode particulier de réalisation, le calculateur 12 de gestion de vol et le calculateur 18 de guidage de l'aéronef sont intégrés dans un calculateur mixte de gestion de vol et de guidage, de type FMGC (« Flight Management and Guidance Computer » en anglais).

**Revendications**

**1.** Système (10) d'aide au pilotage d'un aéronef (1), ledit système comprenant un calculateur de gestion de vol (12) de l'aéronef et un calculateur de guidage (18) de l'aéronef, dans lequel le calculateur de gestion de vol est configuré pour :

- déterminer un profil de vitesse initial le long d'un plan de vol courant de l'aéronef et transmettre au calculateur de guidage (18) une consigne de vitesse correspondant au profil de vitesse initial de façon à piloter l'aéronef selon ledit profil de vitesse initial dans un mode dit managé ;
- en réponse à la réception d'une contrainte RTA en un point du plan de vol, déterminer un profil de vitesse dit RTA permettant de respecter ladite contrainte RTA et transmettre au calculateur de guidage (18) une consigne de vitesse dite RTA correspondant au profil de vitesse RTA, de façon à piloter l'aéronef selon ledit profil de vitesse RTA dans le mode managé,

dans lequel le calculateur de guidage (18) est configuré pour :

- accepter la réception d'une vitesse de consigne, dite vitesse sélectée, saisie par un membre d'équipage au moyen d'une interface homme-machine (22) dudit calculateur de guidage (18) lorsque le calculateur de guidage pilote l'aéronef selon la consigne de vitesse RTA en mode managé ; et
- activer un mode dit sélecté dans lequel ledit calculateur de guidage pilote l'aéronef selon la vitesse sélectée,

**caractérisé en ce que** le calculateur de gestion de vol (12) est en outre configuré pour, en réponse à l'activation du mode sélecté dans lequel le calculateur de guidage (18) pilote l'aéronef selon la vitesse sélectée :

- déterminer un point dit de désélection défini de façon à permettre le respect de la contrainte RTA lorsque l'aéronef vole selon la vitesse sélectée entre une position courante de l'aéronef et le point de désélection, puis selon un profil de vitesse prédéterminé entre le point de désélection et le point du plan de vol auquel est associée la contrainte RTA ; et
- commander l'affichage, sur un écran de navigation (20) du cockpit de l'aéronef, d'un symbole (S1) correspondant à la position courante de l'aéronef, d'un symbole ($P_{RTA}$) correspondant à la position du point du plan de vol auquel est associée la contrainte RTA, ainsi que d'un symbole (Ps, $P_{S1}$, $P_{S2}$) correspondant à la position du point de désélection.

**2.** Système selon la revendication 1, **caractérisé en ce que** le calculateur de gestion de vol (12) est configuré pour déterminer le point de désélection de telle façon que le profil de vitesse prédéterminé corresponde à l'un des profils de vitesse suivants :

- le profil de vitesse initial ;
- un profil de vitesse dit minimal, correspondant à des valeurs de vitesse minimale opérationnelle de l'aéronef le long du plan de vol ; ou
- un profil de vitesse dit maximal, correspondant à des valeurs de vitesse maximale opérationnelle de l'aéronef le long du plan de vol.

**3.** Système selon la revendication 2, **caractérisé en ce que** le calculateur de gestion de vol (12) est configuré pour :

- déterminer un premier point de désélection correspondant au profil de vitesse initial et un deuxième point de désélection correspondant à l'un du profil de vitesse minimal et du profil de vitesse maximal ; et
- commander l'affichage, sur l'écran de navigation du cockpit de l'aéronef, d'un symbole ($P_{S1}$)

correspondant à la position du premier point de désélection et d'un symbole (P$_{S2}$) correspondant à la position du deuxième point de désélection.

**4.** Système selon l'une quelconque des revendications précédentes, **caractérisé en ce que** le calculateur de gestion de vol (12) est configuré pour déterminer le point de désélection par une méthode de dichotomie.

**5.** Système selon l'une quelconque des revendications précédentes, **caractérisé en ce que** le calculateur de gestion de vol est configuré pour déterminer un point, dit point milieu, correspondant au milieu de l'intervalle considéré le long du plan de vol entre la position courante de l'aéronef et le point correspondant à la contrainte RTA, puis à déterminer le point de désélection par itérations dans l'intervalle considéré le long du plan de vol entre la position courante de l'aéronef et le point milieu.

**6.** Système selon l'une quelconque des revendications 2 à 5, **caractérisé en ce que** le profil de vitesse initial correspond à un profil de vitesse optimal déterminé de façon à optimiser un critère d'exploitation de l'aéronef, en particulier la consommation de carburant de l'aéronef le long du plan de vol.

**7.** Procédé d'aide au pilotage d'un aéronef (1), l'aéronef comprenant un calculateur de gestion de vol (12) et un calculateur de guidage (18), le procédé comprenant les étapes suivantes mises en œuvre par le calculateur de gestion de vol (12) :

  - déterminer un profil de vitesse initial le long d'un plan de vol courant de l'aéronef et transmettre au calculateur de guidage (18) une consigne de vitesse correspondant au profil de vitesse initial de façon à piloter l'aéronef selon ledit profil de vitesse initial dans un mode dit managé ;
  - en réponse à la réception d'une contrainte RTA en un point du plan de vol, déterminer un profil de vitesse dit RTA permettant de respecter ladite contrainte RTA et transmettre au calculateur de guidage (18) une consigne de vitesse dite RTA correspondant au profil de vitesse RTA, de façon à piloter l'aéronef selon ledit profil de vitesse RTA dans le mode managé,

ainsi que les étapes suivantes mises en œuvre par le calculateur de guidage (18) :

  - accepter la réception d'une vitesse de consigne, dite vitesse sélectée, saisie par un membre d'équipage au moyen d'une interface homme-machine (22) dudit calculateur de guidage lorsque le calculateur de guidage pilote l'aéronef selon la consigne de vitesse RTA en mode managé ; et
  - activer un mode dit sélecté dans lequel ledit calculateur de guidage pilote l'aéronef selon la vitesse sélectée,

le procédé étant **caractérisé en ce qu'**il comprend en outre les étapes suivantes mises en œuvre par le calculateur de gestion de vol (12), en réponse à l'activation du mode sélecté dans lequel le calculateur de guidage (18) pilote l'aéronef selon la vitesse sélectée :

  - déterminer un point dit de désélection défini de façon à permettre le respect de la contrainte RTA lorsque l'aéronef vole selon la vitesse sélectée entre une position courante de l'aéronef et le point de désélection, puis selon un profil de vitesse prédéterminé entre le point de désélection et le point du plan de vol auquel est associée la contrainte RTA ; et
  - commander l'affichage, sur un écran de navigation (20) du cockpit de l'aéronef, d'un symbole (S1) correspondant à la position courante de l'aéronef, d'un symbole (P$_{RTA}$) correspondant à la position du point du plan de vol auquel est associée la contrainte RTA, ainsi que d'un symbole (P$_S$, P$_{S1}$, P$_{S2}$) correspondant à la position du point de désélection.

**8.** Procédé selon la revendication 7, **caractérisé en ce que** le point de désélection est déterminé de telle façon que le profil de vitesse prédéterminé corresponde à l'un des profils de vitesse suivants :

  - le profil de vitesse initial ;
  - un profil de vitesse dit minimal, correspondant à des valeurs de vitesse minimale opérationnelle de l'aéronef le long du plan de vol ; ou
  - un profil de vitesse dit maximal, correspondant à des valeurs de vitesse maximale opérationnelle de l'aéronef le long du plan de vol.

**9.** Procédé selon la revendication 8, **caractérisé en ce qu'**il comprend les étapes suivantes mises en œuvre par le calculateur de gestion de vol :

  - déterminer un premier point de désélection correspondant au profil de vitesse initial et un deuxième point de désélection correspondant à l'un du profil de vitesse minimal et du profil de vitesse maximal ; et
  - commander l'affichage, sur l'écran de navigation du cockpit de l'aéronef, d'un symbole (P$_{S1}$) correspondant à la position du premier point de désélection et d'un symbole (P$_{S2}$) correspondant à la position du deuxième point de désélection.

**10.** Procédé selon l'une des revendications 7 à 9, **caractérisé en ce que** le point de désélection est déterminé par une méthode de dichotomie.

**11.** Procédé selon l'une quelconque des revendications 7 à 10, **caractérisé en ce que** le profil de vitesse initial correspond à un profil de vitesse optimal déterminé de façon à optimiser un critère d'exploitation de l'aéronef, en particulier la consommation de carburant de l'aéronef le long du plan de vol.

**12.** Aéronef (1) comprenant un système d'aide au pilotage (10) selon l'une quelconque des revendications 1 à 6.

Fig. 1

Fig. 2

Fig. 3

Fig. 4

Fig. 5

EP 3 627 273 A1

Europäisches
Patentamt

European
Patent Office

Office européen
des brevets

**RAPPORT DE RECHERCHE EUROPEENNE**

Numéro de la demande

EP 19 19 7075

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | US 5 121 325 A (DEJONGE MICHAEL K [US]) 9 juin 1992 (1992-06-09) * figures 2,7,8 * | 1-12 | INV. G05D1/10 G08G5/00 |
| A | US 2017/323570 A1 (MYREN JASON A [US] ET AL) 9 novembre 2017 (2017-11-09) * alinéas [0019] - [0021]; figure 1 * | 1-12 | |
| A | EP 2 993 543 A1 (HONEYWELL INT INC [US]) 9 mars 2016 (2016-03-09) * alinéas [0014] - [0016]; figures 1-2 * | 1-12 | |
| A | FR 2 942 328 A1 (THALES SA [FR]) 20 août 2010 (2010-08-20) * abrégé; revendication 1 * | 1-12 | |

DOMAINES TECHNIQUES
RECHERCHES (IPC)

G05D
G08G

Le présent rapport a été établi pour toutes les revendications

| Lieu de la recherche | Date d'achèvement de la recherche | Examinateur |
|---|---|---|
| Munich | 15 janvier 2020 | Polednicek, Milos |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14

**ANNEXE AU RAPPORT DE RECHERCHE EUROPEENNE
RELATIF A LA DEMANDE DE BREVET EUROPEEN NO.**

EP 19 19 7075

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-01-2020

| Document brevet cité au rapport de recherche | | Date de publication | Membre(s) de la famille de brevet(s) | | Date de publication |
|---|---|---|---|---|---|
| US 5121325 | A | 09-06-1992 | AUCUN | | |
| US 2017323570 | A1 | 09-11-2017 | CN | 107369338 A | 21-11-2017 |
| | | | US | 2017323570 A1 | 09-11-2017 |
| EP 2993543 | A1 | 09-03-2016 | CN | 105405322 A | 16-03-2016 |
| | | | EP | 2993543 A1 | 09-03-2016 |
| | | | US | 2016069688 A1 | 10-03-2016 |
| FR 2942328 | A1 | 20-08-2010 | FR | 2942328 A1 | 20-08-2010 |
| | | | US | 2010217459 A1 | 26-08-2010 |

EPO FORM P0460

Pour tout renseignement concernant cette annexe : voir Journal Officiel de l'Office européen des brevets, No.12/82

**EP 3 627 273 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5121325 A